# EUROPÄISCHE PATENTSCHRIFT

(11) **EP 2 982 785 B1**
(45) Veröffentlichungstag und Bekanntmachung des Hinweises auf die Patenterteilung: **06.04.2016**
(21) Anmeldenummer: 14179969.2
(22) Anmeldetag: 06.08.2014
(51) Int. Cl.: D02J 13/00, B21F 27/18, B29C 53/16, D21F 1/00

(54) **Vorrichtung und Verfahren zum Geraderichten von Filamenten**
Device and method for straightening filaments
Dispositif et procédé pour rendre les filaments rectilignes

(43) Veröffentlichungstag der Anmeldung: 10.02.2016
(73) Patentinhaber: Karl Mayer Textilmaschinenfabrik GmbH, 63179 Obertshausen (DE)
(72) Erfinder: Ruh, Michael, 63165 Mühlheim (DE)
(74) Vertreter: Knoblauch, Andreas

(56) Entgegenhaltungen:
- EP-A1- 0 568 467
- DE-A1- 19 920 177
- DE-B4-102007 052 594
- JP-A- S5 773 134
- US-A- 3 330 721
- US-A- 4 535 824

## Beschreibung

Die Erfindung betrifft eine Vorrichtung zum Geraderichten von Filamenten, insbesondere Kunststoff-Monofilamenten, mit einer Fördereinrichtung zum Transport der Filamente und einer Heizeinrichtung, die einen Heizkanal aufweist, der einen Transportweg für das Filament bildet.

Ferner betrifft die Erfindung ein Verfahren zur Herstellung geradegerichteter Filamente, insbesondere Kunststoff-Monofilamente, bei dem ein Filament mittels einer Fördereinrichtung kontinuierlich durch einen Heizkanal einer Heizeinrichtung transportiert wird, und der Heizkanal während des kontinuierlichen Transports des Filaments durch den Heizkanal geheizt wird.

Geradegerichtete Filamente, insbesondere Kunststoff-Monofilamente, finden beispielsweise als Steckdrähte in der Herstellung von Spiral- oder Wendel-Sieben Verwendung. Diese Siebe werden in einem zweistufigen Prozess hergestellt. Zunächst werden Wendeln aus Monofilamenten gewickelt und zwischengelagert. Anschließend werden die Wendeln in einem separaten Prozess so abgelegt, dass sich ihre Querschnittsflächen teilweise überlappen. In den hierdurch entstandenen Überlappungsbereich werden Steckdrähte eingesteckt. Diese dienen als Scharnier und stellen eine Verbindung zwischen den Wendeln her. Die Wendeln sind so zu einem Sieb zusammengefügt.

Als Steckdrähte werden insbesondere Kunststoff-Monofilamente bevorzugt, die aus thermoplastischen Kunststoffen gebildet sind. Diese werden typischerweise auf Spulen aufgewickelt angeliefert und gelagert. Bei dieser Art der Lagerung nehmen die Filamente jedoch die gekrümmte Form der Spule an, die auch nach dem Abwickeln teilweise erhalten bleibt. Die Weiterverarbeitung der Filamente zu Steckdrähten wird durch diese verbleibende Krümmung jedoch behindert. Sie muss entsprechend den gegebenen prozesstechnischen Erfordernissen beseitigt werden. Dieser Vorgang wird als Geraderichten der Filamente bezeichnet.

Das Vorgehen nach dem Stand der Technik sieht vor, die Filamente, die als Steckdrähte verwendet werden sollen, vor dem Einsteckvorgang in die Wendeln durch Bohrungen eines erwärmten metallischen Heizblocks zu führen. Derartige Heizblöcke sind jedoch thermisch träge und reagieren auf beabsichtigte Temperaturänderungen nur sehr langsam. Dies führt zu einem Dilemma in der Herstellung geradegerichteter Filamente.

Zum einen weist das Filament Abschnitte auf, die sich in den aufgenommenen Wärmemengen unterscheiden. Bei der Herstellung von Wendelsieben ist es erforderlich, das als Steckdraht verwendete Filament von Zeit zu Zeit abzulängen. Weiterhin laufen der Sieb-Fügeprozess und somit auch der Einsteckvorgang diskontinuierlich ab. Bei diesem Vorgang kommt es zu einem Stillstand des Filaments im Heizblock. Die beim Stillstand des Filaments im Heizblock aufgenommenen Wärmemengen unterscheiden sich somit von den Wärmemengen, die das Filament während des kontinuierlich ablaufenden Einsteckvorgangs aufnimmt. Zum anderen muss vermieden werden, die im Stillstand des Filaments aufgeheizten Abschnitte zu überhitzen. Eine Überhitzung würde zu irreversibler Materialschädigung führen.

Die Temperatur des Heizblocks muss also zum einen so hoch gewählt werden, dass im kontinuierlichen Durchlauf der Filamente eine ausreichende Erwärmung stattfindet. Zum anderen muss die Temperatur so niedrig gewählt werden, dass im Stillstand der Filamente keine irreversible Materialschädigung auftritt. Die Notwendigkeit, zwischen diesen Anforderungen einen Kompromiss zu finden, führt zu Richtergebnissen der Filamente von nur begrenzter Güte.

Der Stand der Technik ist in EP 0 568 467 A1, DE 19920177A1 und US 4 535 824 beschrieben.

Das Dokument DE 10 2007 052 594 B4 betrifft ein Verfahren und eine Vorrichtung zum Herstellen von Wendelsieben. Es wird ein automatisiertes Herstellverfahren für Wendelsiebe angegeben. Die Wendeln werden mittels einer oberhalb einer Arbeitsfläche beweglich angeordneten Wickeleinrichtung erzeugt. Sie werden anschließend durch Bewegung einer Fügeeinrichtung auf dieser Arbeitsfläche durch Einstecken eines Steckdrahtes miteinander verbunden.

Bei einem derartig automatisierten Fügevorgang ist es, im Gegensatz zu einem händischen Fügevorgang, erforderlich, mit geradegerichteten Filamenten hoher Güte zu arbeiten. Ebenso ist der Vorgang des Geraderichtens der Filamente zeitkritisch. Im Ablauf des Herstellprozesses steht lediglich ein definiertes Zeitfenster zur Verfügung, währenddessen der gerichtete Steckdraht eingefügt werden kann. Während des erforderlichen Ablängens des Steckdrahtes, sowie außerhalb des zum Einstecken zur Verfügung stehenden Zeitfensters, kommt es folglich zu einem Stillstand des Steckdrahtes im Heizblock und der Aufnahme einer erhöhten Wärmemenge durch das Filament. Die Aufnahme der erhöhten Wärmemenge führt jedoch zu einer irreversiblen Schädigung des Materials.

Weiterhin ist eine Zwischenlagerung eines geradegerichteten Filaments, das als Steckdraht verwendet werden soll, nicht zweckmäßig. Eine derartige Zwischenlagerung würde eine erneute Umlenkung und damit ein Biegen des zuvor geradegerichteten Filaments erfordern. Die Qualität des Richtergebnisses würde hierdurch vermindert.

Es ist nunmehr Aufgabe der vorliegenden Erfindung, geradegerichtete Filamente, insbesondere Kunststoff-Monofilamente, von hoher Richtgüte bereitzustellen.

Die erfindungsgemäße Aufgabe wird bei einer Vorrichtung der eingangs genannten Art durch die Vorrichtung gemäß Anspruch 1 gelöst.

Das gerade zu richtende Filament wird im Heizkanal der Heizeinrichtung angeordnet und aufgenommen. Der Heizkanal bildet dabei einen Transportweg für das Filament. Auf diesem Transportweg wird das Filament mittels der Heizeinrichtung mit Wärme beaufschlagt. Das Filament kann dabei insbesondere als Kunststoff-Monofilament ausgebildet sein. Weiterhin wird man das Monofilament vorzugsweise aus thermoplastischem Kunststoff bilden. Die aufgenommene Wärmemenge führt zu einer plastischen Verformbarkeit der Filamente. Die Filamente werden mittels der Fördereinrichtung durch den Heizkanal transportiert und können somit geradegerichtet werden. Die durch die Beaufschlagung mit Wärme bedingte plastische Verformbarkeit der Filamente ist reversibel. Um die geradlinige Ausrichtung der Filamente zu fixieren, werden diese mittels der Fördereinrichtung in eine Kühleinrichtung transportiert. In der Kühleinrichtung werden die Filamente in einem Kühlkanal aufgenommen. Dieser Kühlkanal setzt damit den Transportweg für das Filament aus dem Heizkanal heraus fort. Um ein Richtergebnis hoher Güte zu erreichen, darf das Filament während dieses Vorganges nicht gebogen werden. Die Querschnittsflächen von Heizkanal und Kühlkanal überdecken sich zumindest teilweise. Somit ist es möglich, das Filament in einer fortwährend geradlinigen Ausrichtung sowohl durch den Heizkanal als auch den Kühlkanal zu transportieren. Es können gerade gerichtete Filamente hoher Güte bereitgestellt werden.

Dabei ist bevorzugt, dass die Heizeinrichtung eine erste Gaszufuhreinrichtung aufweist, mittels derer der Heizkanal mit heißem Gas, insbesondere unter Druck in Axialrichtung, beaufschlagbar ist. Die Beaufschlagung des Heizkanals mit Wärme geschieht mittels der Beaufschlagung des Heizkanals mit heißem Gas. Das heiße Gas wird durch eine erste Gaszufuhreinrichtung der Heizeinrichtung bereitgestellt. Das heiße Gas kann dabei insbesondere unter Druck in Axialrichtung durch den Heizkanal geleitet werden. Das Filament wird hierdurch in Axialrichtung von heißem Gas mit hoher Strömungsgeschwindigkeit umströmt. Dies hat eine effiziente Aufnahme der bereitgestellten Wärmemenge zur Folge. Die Folge ist eine rasche Erwärmung des Filaments. Die Beaufschlagung des Heizkanals mit heißem Gas ist weiterhin gegenüber der Verwendung eines erwärmten metallischen Heizblocks vorteilhaft. Die Temperatur des verwendeten Gases kann gegenüber dem metallischen Heizblock ohne Auftreten großer Reaktionszeiten verändert werden. Beabsichtigte Temperaturänderungen im Heizkanal können so schnell umgesetzt werden.

Die Heizeinrichtung weist einen Bypass und eine Umschalteinrichtung auf, wobei die Beaufschlagung des Heizkanals mit heißem Gas mittels der Umschalteinrichtung in eine Beaufschlagung des Bypass mit dem heißen Gas umschaltbar ist. Die Beaufschlagung des Heizkanals mit Wärme wird somit annähernd zeitgleich mit der Beaufschlagung des Bypass mit dem heißen Gas mittels der Umschalteinrichtung unterbunden. Hierdurch ergeben sich zwei Vorteile. Zum einen kann die Aufnahme von Wärmemengen bei einem Stillstand des Filaments im Heizkanal dadurch vermieden werden, dass das heiße Gas vom Heizkanal mittels der Umschalteinrichtung in den Bypass umgeleitet wird. Zum anderen kann das verwendete Gas auf der voreingestellten Temperatur belassen werden. Ein Aufheizen oder Abkühlen der verwendeten Gasheizeinrichtung ist nicht notwendig. Ein derartiges Aufheizen oder Abkühlen wäre ebenso technisch schwierig und in dem unter Umständen nur kleinen zur Verfügung stehenden Zeitfenster nur schwer zu realisieren. Die erneute Beaufschlagung des Heizkanals mit heißem Gas ist dabei mittels Umschalten der Beaufschlagung des Bypass mit dem heißen Gas mittels der Umschalteinrichtung in eine Beaufschlagung des Heizkanals mit dem heißen Gas ohne weiteres möglich. Die Umschalteinrichtung kann beispielsweise als Umschaltventil ausgebildet sein.

Vorzugsweise weist die Heizeinrichtung eine zweite Gaszufuhreinrichtung auf, mittels derer der Heizkanal mit kaltem Gas, insbesondere unter Druck in Axialrichtung, beaufschlagbar ist. Der Heizkanal kann mit kaltem Gas beaufschlagt werden, während das heiße Gas vom Heizkanal mittels der Umschalteinrichtung in den Bypass umgeleitet wird. Die vorangegangene Beaufschlagung des Heizkanals mit heißem Gas führt dazu, dass neben dem Filament ebenso die innere Wandung des Heizkanals eine gewisse Wärmemenge aufnimmt. Sobald die Beaufschlagung des Heizkanals mit heißem Gas unterbrochen wird, wird diese Wärmemenge zumindest teilweise wieder an das Innere des Heizkanals abgegeben. Die zusätzlich in den Heizkanal eingetragene Wärmemenge bedingt eine weitere unerwünschte Erwärmung des Filaments. Die Beaufschlagung des Heizkanals mit kaltem Gas während des Stillstandes des Filaments verhindert eine Überhitzung des Filaments durch die verbleibende Restwärme. Die Umströmung des Filaments mit kaltem Gas unter Druck in Axialrichtung hat eine effiziente Kühlung des Heizkanals und damit des Filaments zur Folge.

Es ist bevorzugt, dass die Kühleinrichtung eine dritte Gaszufuhreinrichtung aufweist, mittels derer der Kühlkanal mit kaltem Gas, insbesondere unter Druck in Axialrichtung, beaufschlagbar ist. Die dritte Gaszufuhreinrichtung stellt somit kaltes Gas zur Verfügung, um das Filament im Kühlkanal zu kühlen. Das Filament wird im Kühlkanal in Axialrichtung von kaltem Gas mit hoher Strömungsgeschwindigkeit umströmt. Dies hat eine gute Wärmeabgabe des Filaments zur Folge. Es führt zu einer raschen Abkühlung des Filaments. Die gerade Ausrichtung des Filaments wird hierdurch fixiert.

Vorzugsweise ist der Heizkanal aus einem Material mit geringer spezifischer Wärmekapazität und geringer Wärmeleitzahl gebildet, insbesondere aus glasfaserverstärktem Kunststoff oder Silikat-Schaum. Die Beaufschlagung des Heizkanals mit heißem Gas führt dazu, dass neben dem Filament ebenso die innere Wandung des Heizkanals eine gewisse Wärmemenge aufnimmt. Diese Wärmemenge kann nach einem Umschalten der Beaufschlagung des Heizkanals mit heißem Gas in eine Beaufschlagung des Bypass mit dem heißen Gas von der Wandung wieder an das Innere des Heizkanals abgegeben werden. Hierdurch würde das Filament zusätzliche Wärmemenge aufnehmen. Eine abschnittsweise Überhitzung des geradegerichteten Filaments wäre die Folge. Die in die innere Wandung des Heizkanals eingetragene Wärmemenge sollte dementsprechend gering gehalten werden. Man wird den Kanal daher aus einem Material mit geringer spezifischer Wärmekapazität und geringer Wärmeleitzahl ausbilden. Hierzu kommen beispielsweise glasfaserverstärkte Kunststoffe oder Silikat-Schäume in Betracht.

Vorzugsweise weist der Heizkanal Luftwiderstandswerte auf, die auf Luftwiderstandswerte des Bypass abgestimmt sind. Die erste Gaszufuhreinrichtung kann somit unter gleichbleibenden Betriebsbedingungen kontinuierlich betrieben werden. Eine Umschaltung der Beaufschlagung des Heizkanals mit heißem Gas mittels der Umschalteinrichtung in eine Beaufschlagung des Bypass mit dem heißen Gas ist ohne weiteres möglich. Insbesondere ist es nicht notwendig, die Strömungsgeschwindigkeit des durch die erste Gaszufuhreinrichtung bereitgestellten Gases zu verändern.

Weiterhin ist bevorzugt, dass zwischen der Heizeinrichtung und der Kühleinrichtung eine Ausnehmung angeordnet ist, die den Transportweg für das Filament fortsetzt. Das Filament kann also aus dem Heizkanal heraus in die Ausnehmung und anschließend in den Kühlkanal transportiert werden. Heizkanal, Ausnehmung und Kühlkanal sind somit in Axialrichtung hintereinander angeordnet. Ein geradliniger Transport des Filaments wird ermöglicht. Weiterhin kann das heiße Gas, mit dem der Heizkanal beaufschlagt wird, an dem Ende des Heizkanals, das der Ausnehmung zugewandt ist, entweichen. Ein Eindringen des heißen Gases in den Kühlkanal wird vermieden.

Dabei ist bevorzugt, dass an einem Ende des Heizkanals, das der Ausnehmung zugewandt ist, eine erste Schalldämpfungseinrichtung angeordnet ist, die eine Fortsetzung des Transportwegs für das Filament aufweist, und/oder dass an einem der Ausnehmung abgewandten Ende der Kühleinrichtung eine zweite Schalldämpfungseinrichtung angeordnet ist, die eine Fortsetzung des Transportwegs für das Filament aufweist. Das heiße Gas, mit dem der Heizkanal beaufschlagt wird, entweicht aus diesem radial am Ende des Heizkanals. Der Gasstrahl tritt mit hoher Strömungsgeschwindigkeit aus dem Heizkanal aus und zerfällt. Hierdurch kann es zu einer hohen Lärmbelastung der Umgebung kommen. Die erfindungsgemäß vorgesehene erste Schalldämpfungseinrichtung bedämpft den Zerfall des ausströmenden Gases akustisch. Die Lärmbelastung der Umgebung kann entsprechend reduziert werden. Zugleich ist es möglich, das Filament aus dem Heizkanal durch die erste Schalldämpfungseinrichtung in die Ausnehmung und anschließend in den Kühlkanal zu transportieren. Der Transportweg des Filaments wird aus dem Heizkanal in die erste Schalldämpfungseinrichtung fortgesetzt. Um ein radiales Austreten des heißen Gases zu ermöglichen, kann die erste Schalldämpfungseinrichtung zumindest teilweise beispielsweise aus poröser Sinterbronze gebildet sein. Der Strahl aus kaltem Gas, mit dem der Kühlkanal beaufschlagt wird, tritt mit hoher Strömungsgeschwindigkeit aus dem Kühlkanal aus und zerfällt. Hierdurch kann es zu einer hohen Lärmbelästigung der Umgebung kommen. Die zweite Schalldämpfungseinrichtung bedämpft den Zerfall des ausströmenden kalten Gases akustisch. Das kalte Gas entweicht radial aus der zweiten Schalldämpfungseinrichtung. Die Lärmbelastung der Umgebung kann entsprechend reduziert werden. Zugleich ist es möglich, das Filament aus dem Kühlkanal durch die zweite Schalldämpfungseinrichtung zu transportieren. Der Transportweg des Filaments wird aus dem Kühlkanal in die zweite Schalldämpfungseinrichtung fortgesetzt. Um ein radiales Austreten des kalten Gases zu ermöglichen, kann die zweite Schalldämpfungseinrichtung zumindest teilweise beispielsweise aus poröser Sinterbronze gebildet sein.

Die erfindungsgemäße Aufgabe wird weiterhin durch ein Verfahren der eingangs genannten Arte durch das Verfahren gemäß Anspruch 9 gelöst.

Das Filament wird mittels einer Fördereinrichtung kontinuierlich durch den Heizkanal transportiert, während dieser mit Wärme beaufschlagt wird.

Hierdurch wird diejenige Wärmemenge zur Verfügung gestellt, die benötigt wird, um die plastische Verformbarkeit der Filamente zu erreichen. Die aufgeheizten Filamente werden unter Zug mittels der Fördereinrichtung durch den Heizkanal transportiert. Hierdurch wird die den Filamenten durch die Lagerung auf Spulen eingeprägte Krümmung beseitigt und die Filamente gerade gerichtet. Das Filament wird in einer Transportrichtung nach dem Heizkanal durch einen Kühlkanal transportiert, in dem es gekühlt wird. Durch diese Kühlung wird die geradlinige Ausrichtung des Filaments fixiert. Um ein Biegen des Filaments während des Transports durch Heizkanal und Kühlkanal zu vermeiden, überdecken sich die Querschnittsflächen von Heizkanal und Kühlkanal zumindest teilweise. Es wird ein gemeinsamer Transportweg zwischen Heizkanal und Kühlkanal gebildet. Auf diesem kann das Filament geradlinig vom Heizkanal in den Kühlkanal transportiert werden. Es können gerade gerichtete Filamente von hoher Güte bereitgestellt werden.

Dabei ist bevorzugt, dass der Heizkanal mittels Beaufschlagung mit heißem Gas, insbesondere unter Druck in Axialrichtung, mittels einer ersten Gaszufuhreinrichtung geheizt wird. Die erste Gaszufuhreinrichtung stellt das heiße Gas zur Verfügung. Dieses wird, insbesondere unter Druck und in Axialrichtung, in den Heizkanal eingeleitet. Das heiße Gas umströmt dort das Filament in Axialrichtung mit hoher Strömungsgeschwindigkeit. Die Folge ist ein guter Wärmeübergang vom Gas auf das Filament. Es kommt zu einer raschen Erwärmung des Filaments. Weiterhin ist von Vorteil, dass heißes Gas im Gegensatz zu den nach dem Stand der Technik verwendeten Heizblöcken eine geringere thermische Reaktionszeit aufweist. Die Verwendung von heißem Gas ermöglicht schnellere Temperaturänderungen als die Kontaktwärme thermisch träger Heizblöcke.

Die Beaufschlagung des Heizkanals wird mit heißem Gas zeitsynchron mit dem Transport des Filaments in den Heizkanal begonnen. Eine unnötige Beaufschlagung des Heizkanals mit Wärme wird vermieden, solange ein Filamentabschnitt im Heizkanal ruht. Ein unnötiger Eintrag von Wärmemengen in den ruhenden Filamentabschnitt, sowie die Wandung des Heizkanals wird vermieden. Weiterhin ermöglicht die zeitsynchrone Beaufschlagung des Heizkanals mit heißem Gas mit dem Beginn des Transports des Filaments in den Heizkanal eine gleichmäßige Aufheizung des Filaments.

Vorzugsweise wird die Beaufschlagung des Heizkanals mit heißem Gas zeitsynchron mit einem Stillstand des Filaments im Heizkanal mittels einer Umschalteinrichtung in einen Bypass umgeleitet. Ein weiteres Aufheizen des Filaments während des Stillstands im Heizkanal wird vermieden. Das den Heizkanal beaufschlagende heiße Gas wird in einen Bypass umgeleitet. Das Filament befindet sich nun im Stillstand im Bereich der Heiz- und Kühlkanäle. Die Überhitzung des Filaments kann durch die schlagartige Abschaltung der dem Heizkanal zugeführten Wärme unterbunden werden. Ebenso entfällt die Notwendigkeit eines schlagartigen Ein- bzw. Ausschaltens der ersten Gaszufuhreinrichtung. Diese kann unter gleichbleibenden Betriebsbedingungen kontinuierlich betrieben werden. Bei einem erneuten Anlaufen des Transports des Filaments durch den Heizkanal kann die Beaufschlagung des Bypass mit geheiztem Gas mittels der Umschalteinrichtung in eine Beaufschlagung des Heizkanals mit dem heißen Gas umgeschaltet werden. Die in das Filament eingetragene Wärmemenge kann so präzise gesteuert werden. Geradegerichtete Filamente von hoher Güte lassen sich so herstellen.

Dabei ist bevorzugt, dass zeitsynchron mit der Umleitung der Beaufschlagung des Heizkanals mit heißem Gas in den Bypass der Heizkanal mittels einer zweiten Gaszufuhreinrichtung mit kaltem Gas, insbesondere unter Druck in Axialrichtung, beaufschlagt wird. Es wird verhindert, dass die noch im Heizkanal befindliche Restwärme das ebenfalls dort befindliche Filament stärker erwärmt als dies beim kontinuierlichen Transport des Filaments durch den Heizkanal der Fall ist. Es kann ein definierter Wärmeeintrag in das Filament erfolgen.

Vorzugsweise wird der Kühlkanal mittels Beaufschlagung mit kaltem Gas, insbesondere unter Druck in Axialrichtung, mittels einer dritten Gaszufuhreinrichtung gekühlt. Das gekühlte Filament ist nicht mehr plastisch verformbar. Die geradlinige Ausrichtung des Filaments im Heizkanal durch plastische Verformung, die durch den Wärmeeintrag ermöglicht wird, kann somit fixiert werden. Das kalte Gas wird unter Druck in Axialrichtung in den Kühlkanal eingeleitet. Es umströmt mit hoher Strömungsgeschwindigkeit das Filament, wodurch ein guter Wärmeübergang aus dem Filament in das umströmende Gas ermöglicht wird. Es kommt zu einer raschen Abkühlung des Filaments. Nach Austritt aus dem Kühlkanal in einer Transportrichtung ist das Filament fertig geradegerichtet. Es kann nun beispielsweise als Steckdraht bei der Herstellung von Wendelsieben Verwendung finden.

Schließlich ist bevorzugt, dass zwischen Heizkanal und Kühlkanal eine Ausnehmung angeordnet ist, und wobei an einem der Ausnehmung zugewandten Ende des Heizkanals eine erste Schalldämpfungseinrichtung angeordnet ist, durch die das Filament transportiert wird, und/oder dass an einem der Ausnehmung abgewandten Ende der Kühleinrichtung eine zweite Schalldämpfungseinrichtung angeordnet ist, durch die das Filament transportiert wird. Der Heizkanal wird unter Druck in Axialrichtung mit heißem Gas beaufschlagt. Dieses tritt radial am Ende des Heizkanals in die Ausnehmung aus. Der Zerfall des mit hoher Strömungsgeschwindigkeit strömenden Gasstroms würde zu einer erhöhten Lärmbelastung der Umgebung führen. Die erste Schalldämpfungseinrichtung dient dazu, den austretenden Gasstrom akustisch zu bedämpfen. Zugleich lässt sich jedoch das Filament durch die erste Schalldämpfungseinrichtung transportieren. Der Transportweg des Filaments wird so aus dem Heizkanal in die erste Schalldämpfungseinrichtung, anschließend in die Ausnehmung und schließlich in den Kühlkanal fortgesetzt. Dieser Transportweg ist dabei so angeordnet, dass das Filament über die gesamte Erstreckung des Transportweges hinweg geradlinig ausgerichtet ist. Hierdurch lässt sich ein geradegerichtetes Filament hoher Güte bereitstellen. Der Kühlkanal wird unter Druck in Axialrichtung mit kaltem Gas beaufschlagt. Dieses tritt radial am Ende des Kühlkanals aus der zweiten Schalldämpfungseinrichtung aus. Diese dient dazu, den austretenden Gasstrom akustisch zu bedämpfen. Der Transportweg des Filaments wird geradlinig aus dem Kühlkanal in die zweite Schalldämpfungseinrichtung fortgesetzt.

Die Erfindung wird im Folgenden anhand eines bevorzugten Ausführungsbeispiels in Verbindung mit den Zeichnungen beschrieben. Hierin zeigen:

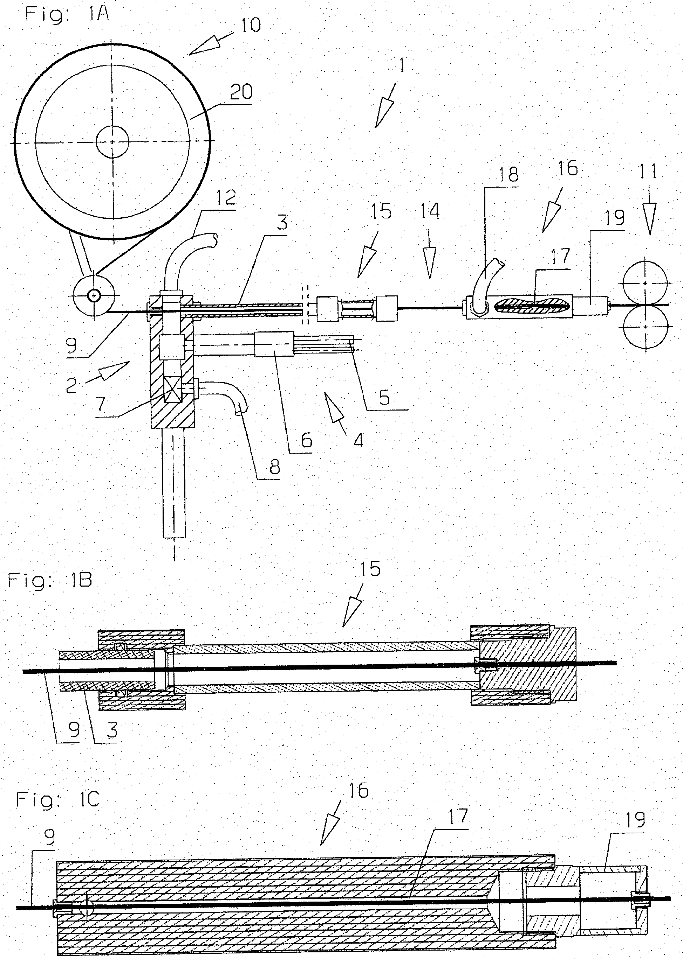

- Fig. 1A-C: einen Schnitt einer Vorrichtung zum Geraderichten von Filamenten, sowie Detailansichten B und C.

Fig. 1A zeigt eine Vorrichtung 1 mit einer Heizeinrichtung 2. Die Heizeinrichtung 2 weist dabei einen Heizkanal 3, eine erste Gaszufuhreinrichtung 4 mit einer ersten Gaszufuhr 5 und einer Gasheizeinrichtung 6 auf. Weiterhin umfasst die Heizeinrichtung 2 eine Umschalteinrichtung 7 und einen Bypass 8.

Ein gerade zu richtendes Filament 9 wird von einer Vorratsspule 20 über einen gebremsten Abwickler 10 abgezogen und mittels einer Fördereinrichtung, die beispielhaft als ein Förderwalzenpaar 11 ausgeführt ist, durch den Heizkanal 3 transportiert.

Zeitsynchron mit dem Transport des Filaments 9 in den Heizkanal 3 wird mittels der ersten Gaszufuhreinrichtung 4 der Heizkanal 3 mit heißem Gas beaufschlagt. Hierzu ist die erste Gaszufuhreinrichtung 4 mit einer ersten Gaszufuhr 5 verbunden, durch die Gas in die erste Gaszufuhreinrichtung 4 geleitet wird. Dieses Gas wird in der Gasheizeinrichtung 6 geheizt und auf eine definierte Temperatur erwärmt. Das heiße Gas wird anschließend in den Heizkanal 3 eingeleitet. Es durchströmt diesen unter Druck in Axialrichtung. Zeitgleich mit dem Einleiten des Gases in den Heizkanal 3 wird das Filament 9 durch den Heizkanal 3 transportiert. Hierdurch ergibt sich ein gleichmäßiger Eintrag von Wärme in das Filament 9. Dieses wird durch das heiße Gas mit hoher Strömungsgeschwindigkeit umströmt. Diese Umströmung erhöht die Effizienz des Wärmeeintrags in das Filament 9. Es kommt zu einer raschen Erwärmung des Filaments 9.

Bei einem Stillstand des Filaments 9 im Heizkanal 3 ist eine schlagartige Abschaltung der dem Heizkanal 3 zugeführten Heizenergie erforderlich, da andernfalls eine irreversible Schädigung des Filaments 9 auftreten kann. Hierzu wird mittels der Umschalteinrichtung 7 die Beaufschlagung des Heizkanals 3 mit heißem Gas in eine Beaufschlagung des Bypass 8 mit dem heißen Gas umgeschaltet. Die Umschalteinrichtung 7 kann dabei beispielsweise als Umschaltventil ausgebildet sein. Das heiße Gas wird nun nicht mehr durch den Heizkanal 3, sondern durch den Bypass 8 geleitet. Dieser Bypass 8 ist dabei so beschaffen, dass er auf den Heizkanal 3 abgestimmte Luftwiderstandswerte aufweist. Hierdurch kann die erste Gaszufuhreinrichtung 4 unter gleichbleibenden Betriebsbedingungen kontinuierlich betrieben werden. Insbesondere ist es nicht notwendig, Strömungsgeschwindigkeit oder Temperatur des Gases zu verändern. Die Notwendigkeit eines schlagartigen Ein- bzw. Ausschaltens der ersten Gaszufuhreinrichtung 4 entfällt somit. Dies wäre technisch ohnehin problematisch.

Zeitsynchron mit dem Umschalten der Beaufschlagung des Heizkanals 3 mit heißem Gas in eine Beaufschlagung des Bypass 8 mit dem heißen Gas erfolgt die Beaufschlagung des Heizkanals 3 mit kaltem Gas. Dies geschieht mittels einer zweiten Gaszufuhreinrichtung (nicht dargestellt) über eine zweite Gaszufuhr 12, durch die das Gas in den Heizkanal 3 geleitet wird. Die noch im Heizkanal 3 befindliche Restwärme kann somit nicht in das stillstehende Filament 9 eingetragen werden. Ein im Stillstand befindliches Filament 9 wird somit nicht stärker erwärmt als ein kontinuierlich durch den Heizkanal 3 transportiertes Filament 9. Das Filament 9 wird somit im Heizkanal 3 zuverlässig auf eine definierte Temperatur erwärmt.

Während der Beaufschlagung des Heizkanals 3 mit heißem Gas wird eine gewisse Wärmemenge in die Wandung des Heizkanals 3 eingetragen. Diese Wärmemenge kann dann bei einem Wegfall der Beaufschlagung des Heizkanals 3 mit heißem Gas zumindest teilweise zu einer weiteren Erwärmung des Filaments 9 beitragen. Um diese zusätzliche Erwärmung möglichst gering zu halten, wird man den Heizkanal 3 aus einem Material bilden, welches eine geringe spezifische Wärmekapazität und eine geringe Wärmeleitzahl aufweist. Hierdurch lässt sich der Wärmeeintrag in die Wandung des Heizkanals 3 klein halten. Eine zusätzliche Aufwärmung des Filaments 9 bei Wegfall der Beaufschlagung des Heizkanals 3 mit heißem Gas kann somit vermieden werden. Der Heizkanal 3 kann beispielsweise aus glasfaserverstärktem Kunststoff gebildet sein. Ebenso ist die Verwendung von Silikat-Schäumen als Material für den Heizkanal 3 vorteilhaft.

Nach Durchlaufen des Heizkanals 3 verlässt das Filament 9 diesen in Transportrichtung und tritt in eine Ausnehmung 14 ein. Die Ausnehmung 14 gestattet eine geradlinige Fortsetzung des Transportweges des Heizkanals 3. Am Ende des Heizkanals 3 tritt ebenso das unter Druck in Axialrichtung durch den Heizkanal 3 geleitete heiße Gas aus. Der mit hoher Strömungsgeschwindigkeit durch den Heizkanal 3 propagierende Gasstrahl beginnt in der Ausnehmung 14 zu zerfallen. Hieraus resultiert eine erhöhte Lärmbelastung für die Umgebung. Aus diesem Grunde kann in der Ausnehmung 14 an dem in der Ausnehmung 14 befindlichen Ende des Heizkanals 3 eine erste Schalldämpfungseinrichtung 15 vorgesehen sein. Diese dient dazu, den zerfallenden Gasstrom akustisch zu bedämpfen. Das austretende Gas entweicht radial aus der ersten Schalldämpfungseinrichtung 15. Zugleich ist es dabei möglich, den geradlinigen Transportweg des Filaments 9 durch den Heizkanal 3 in der ersten Schalldämpfungseinrichtung 15 fortzusetzen. Das Filament 9 muss für den Transport durch die erste Schalldämpfungseinrichtung 15 nicht gebogen werden.

Fig. 1B zeigt eine Detailansicht B der ersten Schalldämpfungseinrichtung 15.

Zugleich werden durch die vorgesehene Ausnehmung 14 der Austritt und damit die Trennung des heißen Gases von einer Kühleinrichtung 16 ermöglicht. Diese Kühleinrichtung 16 weist einen Kühlkanal 17 auf. Der Kühlkanal 17 setzt den Transportweg des Filaments 9 aus der Ausnehmung 14 hinaus geradlinig fort. Die Querschnittsflächen von Heizkanal 3 und Kühlkanal 17 überdecken sich somit zumindest teilweise derartig, dass ein geradliniger Transport des Filaments 9 durch beide ermöglicht wird.

Das im Heizkanal 3 erwärmte Filament 9 tritt also nach Durchlaufen der Ausnehmung 14 in den Kühlkanal 17 ein. Der Kühlkanal 17 wird, bevorzugt unter Druck und in Axialrichtung, mit kaltem Gas beaufschlagt. Diese Beaufschlagung geschieht mittels einer dritten Gaszufuhreinrichtung (nicht dargestellt) über eine dritte Gaszufuhr 18, durch die das kalte Gas in den Kühlkanal 17 geführt wird. Beim Transport des Filaments 9 durch den Kühlkanal 17 wird das Filament 9 von kaltem Gas mit hoher Strömungsgeschwindigkeit umströmt. Hieraus resultiert ein guter Wärmeübergang vom Filament 9 in das kalte Gas. Es kommt zu einer raschen Abkühlung des Filaments 9. Durch die Abkühlung des Filaments 9 geht dessen plastische Verformbarkeit verloren. Die geradlinige Ausrichtung des Filaments 9 wird somit fixiert.

Nach Durchlaufen des Kühlkanals 17 verlässt das Filament 9 die Kühleinrichtung 16 in der Transportrichtung. Das den Kühlkanal 17 verlassende Filament 9 ist fertig geradegerichtet. Es kann nun beispielsweise in der Herstellung von Spiral- oder Wendel-Sieben als Steckdraht verwendet werden.

Ebenso kann am Ende des Kühlkanals 17 eine zweite Schalldämpfungseinrichtung 19 vorgesehen sein. Diese dient ebenso wie die erste Schalldämpfungseinrichtung 15 dazu, den zerfallenden Gasstrom akustisch zu bedämpfen. Das austretende Gas entweicht radial aus der zweiten Schalldämpfungseinrichtung 19. Der geradlinige Transport des Filaments 9 durch den Kühlkanal 17 kann in der zweiten Schalldämpfungseinrichtung 19 fortgesetzt werden. Insbesondere muss das Filament 9 für den Transport durch die zweite Schalldämpfungseinrichtung 19 nicht gebogen werden.

Fig. 1C zeigt eine Detailansicht C der Kühleinrichtung 16 und der zweiten Schalldämpfungseinrichtung 19.

Bei der Verwendung des geradegerichteten Filaments 9 für die Herstellung von Steckdrähten für Wendelsiebe wird man dabei wie folgt vorgehen. Das Filament 9 wird mittels des gebremsten Abwicklers 10 von einer Vorratsspule 20 abgezogen. Das Filament 9 wird mittels des Förderwalzenpaars 11 durch den Heizkanal 3 der Heizeinrichtung 2 transportiert. Zeitgleich mit dem Einführen des Filaments 9 in den Heizkanal 3 wird dieser mittels der ersten Gaszufuhreinrichtung 4 mit heißem Gas beaufschlagt. An dem der Ausnehmung 14 zugewandten Ende des Heizkanals 3 verlässt das Filament 9 den Heizkanal 3. Es wird durch die Ausnehmung 14 und die gegebenenfalls vorgesehene erste Schalldämpfungseinrichtung 15 transportiert. Der Transportweg des Filaments 9 wird in gerader Linie aus dem Heizkanal 3 in die Ausnehmung 14 und die gegebenenfalls vorgesehene erste Schalldämpfüngseinrichtung 15 in den Kühlkanal 17 der Kühleinrichtung 16 fortgesetzt. Der Kühlkanal 17 wird mit kaltem Gas beaufschlagt. Das im Heizkanal 3 erhitzte Filament 9 wird somit im Kühlkanal 17 rückgekühlt. Die gerade Ausrichtung des Filaments 9 wird somit fixiert. Beim Verlassen des Kühlkanals 17 durch die gegebenenfalls vorgesehene zweite Schalldämpfungseinrichtung 19 ist das Filament 9 somit fertig geradegerichtet. Es kann nun nach Verlassen des Kühlkanals 17 bzw. der zweiten Schalldämpfungseinrichtung 19 direkt in die Wendeln, die zur Herstellung des Wendelsiebes bereitgestellt sind, eingeführt werden.

Für die Herstellung eines Wendelsiebes wird ein Filament 9 einer gewissen vorbestimmten Länge benötigt. Sobald ein Filament 9 dieser Länge in das Wendelsieb eingeführt worden ist, muss das Filament 9 abgelängt werden. Hierzu ist es notwendig, den Transport des Filaments 9 zumindest kurzzeitig zu unterbrechen. Dies ist notwendig, um den Ablängvorgang durchzuführen. Auch muss die Vorrichtung 1 (oder die entsprechende Anordnung an Wendeln) für den nächsten Einsteckvorgang weiter bewegt werden. Außerhalb des für den Einsteckvorgang zur Verfügung stehenden Zeitfensters und während des Ablängens kommt es zu einem Stillstand des Filaments 9 im Heizkanal 3.

Zeitgleich mit diesem Stillstand wird die Beaufschlagung des Heizkanals 3 mit heißem Gas vermittels der Umschalteinrichtung 7 in eine Beaufschlagung des Bypass 8 umgeschaltet. Ebenso wird der Heizkanal 3 zeitsynchron mittels der zweiten Gaszufuhreinrichtung (nicht dargestellt) über die zweite Gaszufuhr 12 mit kaltem Gas beaufschlagt. Die erste Gaszufuhreinrichtung 4 wird also während des Stillstands des Filaments 9 im Heizkanal 3 kontinuierlich unter gleichbleibenden Betriebsbedingungen betrieben. Die im Heizkanal 3 verbliebene Restwärme kann somit nicht zu einer weiteren Erwärmung des Filaments 9 beitragen. Nachdem das Filament 9 entsprechend den Erfordernissen abgelängt wurde und die Vorrichtung 1 (oder gegebenenfalls die zu verbindenden Wendeln) für den nächsten Einsteckvorgang weiter bewegt worden sind, wird die Umschalteinrichtung 7 erneut betätigt. Hierdurch wird die Beaufschlagung des Bypass 8 mit dem durch die erste Gaszufuhreinrichtung 4 bereitgestellten heißen Gas in eine Beaufschlagung des Heizkanals 3 mit diesem Gas umgeschaltet. Der beschriebene Vorgang beginnt erneut. Dieser kann beliebig oft wiederholt werden. Der Vorgang des Geraderichtens der Filamente 9 kann somit so diskontinuierlich betrieben werden.

Bei den geradlinig zu richtenden Filamenten 9 kann es sich insbesondere um Kunststoff-Monofilamente handeln. Insbesondere wird man einen thermoplastischen Kunststoff für die Monofilamente verwenden. Mit dem erfindungsgemäßen Verfahren und der erfindungsgemäßen Vorrichtung 1 lassen sich geradegerichtete Filamente 9, insbesondere Kunststoff-Monofilamente, von hoher Richtgüte bereitstellen.

## Patentansprüche

1. Vorrichtung (1) zum Geraderichten von Filamenten (9), insbesondere Kunststoffmonofilamenten, mit einer Fördereinrichtung zum Transport der Filamente (9) und einer Heizeinrichtung (2), die einen Heizkanal (3) aufweist, der einen Transportweg für das Filament (9) bildet, wobei in einer Transportrichtung hinter der Heizeinrichtung (2) eine Kühleinrichtung (16) angeordnet ist, die einen Kühlkanal (17) aufweist, der den Transportweg für das Filament (9) fortsetzt, und wobei sich Querschnittsflächen von Heizkanal (3) und Kühlkanal (17) zumindest teilweise überdecken, **dadurch gekennzeichnet, dass** die Heizeinrichtung (2) einen Bypass (8) und eine Umschalteinrichtung (7) aufweist, wobei die Beaufschlagung des Heizkanals (3) mit heißem Gas mittels der Umschalteinrichtung (7) in eine Beaufschlagung des Bypass (8) mit dem heißen Gas umschaltbar ist.

2. Vorrichtung nach Anspruch 1, **dadurch gekennzeichnet, dass** die Heizeinrichtung (2) eine erste Gaszufuhreinrichtung (4) aufweist, mittels derer der Heizkanal (3) mit heißem Gas, insbesondere unter Druck in Axialrichtung, beaufschlagbar ist.

3. Vorrichtung nach einem der Ansprüche 1 oder 2, **dadurch gekennzeichnet, dass** die Heizeinrichtung (2) eine zweite Gaszufuhreinrichtung aufweist, mittels derer der Heizkanal (3) mit kaltem Gas, insbesondere unter Druck in Axialrichtung, beaufschlagbar ist.

4. Vorrichtung nach einem der Ansprüche 1 bis 3, **dadurch gekennzeichnet, dass** die Kühleinrichtung (16) eine dritte Gaszufuhreinrichtung aufweist, mittels derer der Kühlkanal (17) mit kaltem Gas, insbesondere unter Druck in Axialrichtung, beaufschlagbar ist.

5. Vorrichtung nach einem der Ansprüche 1 bis 4, **dadurch gekennzeichnet, dass** der Heizkanal (3) aus einem Material mit geringer spezifischer Wärmekapazität und geringer Wärmeleitzahl gebildet ist, insbesondere aus glasfaserverstärktem Kunststoff oder Silikatschaum.

6. Vorrichtung nach einem der Ansprüche 1 bis 5 **dadurch gekennzeichnet, dass** der Heizkanal (3) Luftwiderstandswerte aufweist, die auf Luftwiderstandswerte des Bypass (8) abgestimmt sind.

7. Vorrichtung nach einem der Ansprüche 1 bis 6, **dadurch gekennzeichnet, dass** zwischen der Heizeinrichtung (2) und der Kühleinrichtung (16) eine Ausnehmung (14) angeordnet ist, die den Transportweg für das Filament (9) fortsetzt.

8. Vorrichtung nach Anspruch 6, **dadurch gekennzeichnet, dass** an einem Ende des Heizkanals (3), das der Ausnehmung (14) zugewandt ist, eine erste Schalldämpfungseinrichtung (15) angeordnet ist, die eine Fortsetzung des Transportwegs für das Filament (9) aufweist, und/oder dass an einem der Ausnehmung (14) abgewandten Ende der Kühleinrichtung (16) eine zweite Schalldämpfungseinrichtung (19) angeordnet ist, die eine Fortsetzung des Transportwegs für das Filament (9) aufweist.

9. Verfahren zur Herstellung gerade gerichteter Filamente (9), insbesondere Kunststoffmonofilamente, bei dem ein Filament (9) mittels einer Fördereinrichtung kontinuierlich durch einen Heizkanal (3) einer Heizeinrichtung (2) transportiert wird, und der Heizkanal (3) während des kontinuierlichen Transports des Filaments (9) durch den Heizkanal (3) geheizt wird, wobei das Filament (9) in Transportrichtung nach der Heizeinrichtung (2) durch einen Kühlkanal (17) einer Kühleinrichtung (16) transportiert wird, wobei der Kühlkanal (17) gekühlt wird, und sich Querschnittsflächen von Heizkanal (3) und Kühlkanal (17) zumindest teilweise überdecken, **dadurch gekennzeichnet, dass** die Beaufschlagung des Heizkanals (3) mit heißem Gas zeitsynchron mit dem Transport des Filaments (9) in den Heizkanal (3) begonnen wird.

10. Verfahren nach Anspruch 9, **dadurch gekennzeichnet, dass** der Heizkanal (3) mittels Beaufschlagung mit heißem Gas, insbesondere unter Druck in Axialrichtung, mittels einer ersten Gaszufuhreinrichtung (4) geheizt wird.

11. Verfahren nach einem der Ansprüche 9 oder 10, **dadurch gekennzeichnet, dass** die Beaufschlagung des Heizkanals (3) mit heißem Gas zeitsynchron mit einem Stillstand des Filaments (9) im Heizkanal (3) mittels einer Umschalteinrichtung (7) in einen Bypass (8) umgeleitet wird.

12. Verfahren nach Anspruch 11, **dadurch gekennzeichnet, dass** zeitsynchron mit der Umleitung der Beaufschlagung des Heizkanals (3) mit heißem Gas in den Bypass (8) der Heizkanal (3) mittels einer zweiten Gaszufuhreinrichtung mit kaltem Gas, insbesondere unter Druck in Axialrichtung, beaufschlagt wird.

13. Verfahren nach einem der Ansprüche 9 bis 12, **dadurch gekennzeichnet, dass** der Kühlkanal (17) mittels Beaufschlagung mit kaltem Gas, insbesondere unter Druck in Axialrichtung, mittels einer ditten Gaszufuhreinrichtung gekühlt wird.

14. Verfahren nach einem der Ansprüche 9 bis 13, **dadurch gekennzeichnet, dass** zwischen Heizkanal (3) und Kühlkanal (17) eine Ausnehmung (14) angeordnet ist, und wobei an einem der Ausnehmung (14) zugewandten Ende des Heizkanals (3) eine erste Schalldämpfungseinrichtung (15) angeordnet ist, durch die das Filament (9) transportiert wird, und/oder dass an einem der Ausnehmung (14) abgewandten Ende der Kühleinrichtung (16) eine zweite Schalldämpfungseinrichtung (19) angeordnet ist, durch die das Filament (9) transportiert wird.

## Claims

1. Apparatus (1) for straightening filaments (9), in particular plastic mono filaments, with a transport device for transporting the filaments (9) and with a heating device (2) comprising a heating channel (3) forming a transport path for the filament (9), wherein a cooling device (16) is arranged downstream of the heating device (2) in a direction of transport, comprising a cooling channel (17) that continues the transport path for the filament (9) and wherein cross-sectional areas of heating channel (3) and cooling channel (17) at least partially overlap, **characterized in that** the heating device (2) comprises a bypass (8) and a switch over device (7), wherein the loading of the heating channel (3) with hot gas is switchable over to a loading of the bypass (8) with the hot gas by means of the switch over device (7).

2. Apparatus according to claim 1, **characterized in that** the heating device (2) comprises a first gas supply device (4) with which the heating channel can be loaded with hot gas, in particular under pressure in axial direction.

3. Apparatus according to claim 1 or 2, **characterized in that** the heating device (2) comprises a second gas supply device with which the heating channel (3) can be loaded with cold gas, in particular under pressure in axial direction.

4. Apparatus according to any of claims 1 to 3, **characterized in that** the cooling device (16) comprises a third gas supply device with which the cooling channel (17) can be loaded with cold gas, in particular under pressure in axial direction.

5. Apparatus according to any of claims 1 to 4, **characterized in that** the heating channel (3) is formed from a material having a low specific heat capacity and a low coefficient of thermal conductivity, in particular from fiberglass-reinforced plastic or silicate foam.

6. Apparatus according to any of claims 1 to 5, **characterized in that** the heating channel (3) comprises drag coefficients matched to drag coefficients of the bypass (8).

7. Apparatus to any of claims 1 to 6, **characterized in that** a recess (14) is arranged between the heating device (2) and the cooling device (16), the recess continuing the transport path for the filament (9).

8. Apparatus according to claim 6, **characterized in that** a first noise reducing device (15) is located at an end of the heating channel (3) facing the recess (14), said first noise reducing device comprising a continuation of the transport path for the filament and / or that at a second noise reducing device (19) is located at an end of the cooling device (16) opposite the recess (14), said second noise reducing device (19) comprises a continuation of the transport path for the filament (9).

9. Method for producing straightened filaments (9), in particular plastic mono filaments, in which a filament (9) is continuously transported through a heating channel (3) of a heating device (2) by means of a transport device and the heating channel (3) is heated during the continuous transport of the filament (9) through the heating channel (3), wherein the filament (9) is transported through a cooling channel (17) of a cooled cooling device (16) in transport direction downstream the heating device (2), a cross-sectional areas of heating channel (3) and cooling channel (17) at least partially overlap, **characterized in that** the loading of the heating channel (3) with hot gas is started timely synchronously with the transport of the filament (9) into the heating channel (3).

10. Method according to claim 9, **characterized in that** the heating channel (3) is heated by loading with hot gas by means of a first gas supply device (4), in particular under pressure in axial direction.

11. Method according to claim 9 or 10, **characterized in that** the loading of the heating channel (3) with hot gas is timely synchronously with a stop of the filament (9) in the heating channel (3) deviated into a bypass (8) by means of a switching over device (7).

12. Method according to claim 11, **characterized in that** timely synchronously with the deviation of the loading of the heating channel (3) with hot gas into the bypass (8) the heating channel (3) is loaded with cold gas by means of a second gas supply device, in particular under pressure in axial direction.

13. Method according to any of claims 9 to 12, **characterized in that** the cooling channel (17) is cooled by means of loading with cold gas, by means of a third gas supply, in particular under pressure in axial direction.

14. Method according to any of claims 9 to 13, **characterized in that** a recess (14) is arranged between heating channel (3) and cooling channel (17) and wherein a first noise reducing device (15) through which the filament is transported is located at an end of the heating channel facing the recess (14) and / or that a second noise reducing device (19) through which the filament (9) is transported is located at an end of the cooling device (16) opposite the recess (14).

## Revendications

1. Dispositif (1) pour redresser des filaments (9), en particulier des monofilaments de matière plastique, comprenant un dispositif de transport pour le transport des filaments (9) et un dispositif de chauffage (2), qui présente un canal de chauffage (3), qui forme une voie de transport pour le filament (9), dans lequel est aménagé derrière le Dispositif de chauffage (2) dans le sens de transport un dispositif de refroidissement (16), qui présente un canal de refroidissement (17), qui prolonge la voie de transport pour le filament (9), et dans lequel les surfaces en coupe transversale du canal de chauffage (3) et du canal de refroidissement (17) se recouvrent au moins en partie, **caractérisé en ce que** le dispositif de chauffage (2) présente une dérivation (8) et un dispositif de commutation inverseur (7), dans lequel l'alimentation du canal de chauffage (3) par du gaz chaud peut être convertie au moyen du dispositif de commutation inverseur (7) en une alimentation de la dérivation (8) par le gaz chaud.

2. Dispositif selon la revendication 1, **caractérisé en ce que** le dispositif de chauffage (2) présente un premier dispositif d'alimentation en gaz (4) au moyen duquel le canal de chauffage (3) peut être alimenté en gaz chaud, en particulier sous pression dans la direction axiale.

3. Dispositif selon l'une quelconque des revendications 1 ou 2, **caractérisé en ce que** le dispositif de chauffage (2) présente un deuxième dispositif d'alimentation en gaz au moyen duquel le canal de chauffage (3) peut être alimenté en gaz froid, en particulier sous pression dans la direction axiale.

4. Dispositif selon l'une quelconque des revendications 1 à 3, **caractérisé en ce que** le dispositif de refroidissement (16) présente un troisième dispositif d'alimentation en gaz au moyen duquel le canal de refroidissement (17) peut être alimenté en gaz froid, en particulier sous pression dans la direction axiale.

5. Dispositif selon l'une quelconque des revendications 1 à 4, **caractérisé en ce que** le canal de chauffage (3) est constitué d'un matériau de faible capacité thermique spécifique et de faible conductibilité, en particulier en matière plasmique renforcée de fibres de verre ou en mousse de silicate.

6. Dispositif selon l'une quelconque des revendications 1 à 5, **caractérisé en ce que** le canal de chauffage (3) présente des valeurs de résistance à l'air qui sont ajustées sur les valeurs de résistance à l'air de la dérivation (8).

7. Dispositif selon l'une quelconque des revendications 1 à 6, **caractérisé en ce qu'**est ménagée entre le dispositif de chauffage (2) et le dispositif de refroidissement (16) une cavité (14) qui prolonge la voie de transport pour le filament (9).

8. Dispositif selon la revendication 6, **caractérisé en ce qu'**est aménagé à une extrémité du canal de chauffage (3), qui est tournée vers la cavité (14), un premier dispositif amortisseur de bruit (15), qui présente un prolongement de la voie de transport pour le filament (9), et/ou à une extrémité du dispositif de refroidissement (16) opposée à la cavité (14), est aménagé un deuxième dispositif d'amortissement de bruit (19), qui présente un prolongement de la voie de transport pour le filament (9).

9. Procédé de fabrication de filaments redressés (9), en particulier de monofilaments de matière plastique, dans lequel un filament (9) est transporté au moyen d'un dispositif de transport en continu à travers un canal de chauffage (3) d'un dispositif de chauffage (2) et le canal de chauffage (3) est chauffé au cours du transport continu du filament (9) à travers le canal de chauffage (3), dans lequel le filament (9) est transporté dans le sens de transport après le dispositif de chauffage (2) à travers un canal de refroidissement (17) d'un dispositif de refroidissement (16), dans lequel le canal de refroidissement (17) est refroidi, et les surfaces en coupe transversale du canal de chauffage (3) et du canal de refroidissement (17) se recouvrent au moins en partie, **caractérisé en ce que** l'alimentation du canal de chauffage (3) en gaz chaud est démarrée en synchronisme avec le transport du filament (9) dans le canal de chauffage (3).

10. Procédé selon la revendication 9 **caractérisé en ce que** le canal de chauffage (3) est chauffé par alimentation en gaz chaud, en particulier sous pression dans la direction axiale, au moyen d'un premier dispositif d'alimentation en gaz (4).

11. Procédé selon l'une quelconque des revendications 9 ou 10, **caractérisé en ce que** l'alimentation du canal de chauffage (3) en gaz chaud est déviée en synchronisme avec un arrêt du filament (9) dans le canal de chauffage (3) au moyen d'un dispositif de commutation inverseur (7) dans une dérivation (8).

12. Procédé selon la revendication 11, **caractérisé en ce que**, en synchronisme avec la déviation de l'alimentation du canal de chauffage (3) en gaz chaud dans la dérivation (8), le canal de chauffage (3) est alimenté en gaz froid au moyen d'un deuxième dispositif d'alimentation en gaz, en particulier sous pression dans la direction axiale.

13. Procédé selon l'une quelconque des revendications 9 à 12, **caractérisé en ce que** le canal de refroidissement (17) est refroidi par alimentation en gaz froid, en particulier sous pression dans la direction axiale, au moyen d'un troisième dispositif d'alimentation en gaz.

14. Procédé selon l'une quelconque des revendications 9 à 13, **caractérisé en ce qu'**est ménagée entre le canal de chauffage (3) et le canal de refroidissement (17) une cavité (14) et dans lequel, à une extrémité du canal de chauffage (3) tournée vers la cavité (14) est aménagé un premier dispositif d'amortissement de bruit (15) à travers lequel le filament (9) est transporté et/ou **en ce que**, à une extrémité du dispositif de refroidissement (16) opposée à la cavité (14) est aménagé un deuxième dispositif d'amortissement de bruit (19) à travers lequel le filament (9) est transporté.
